# EUROPEAN PATENT APPLICATION

(11) **EP 4 790 827 A1**
(43) Date of publication of application: **12.08.2026**
(21) Application number: 24874444.3
(22) Date of filing: 12.09.2024
(51) Int. Cl.: H01M 50/59, H01M 50/204, H01M 50/222, H01M 50/224, H01M 50/227, H01M 50/231, H01M 50/50, H01M 50/505, H01M 50/562, H01M 50/588

(54) **BATTERY MODULE**

(30) Priority: 04.10.2023 JP 2023172622
(71) Applicant: AESC Japan Ltd., Yokohama-shi, Kanagawa 220-0012 (JP)
(72) Inventor: NAKAI, Masayuki, Zama-shi, Kanagawa 252-0012 (JP); HASHIMOTO, Yuuichirou, Zama-shi, Kanagawa 252-0012 (JP); FU, Yongliang, Zama-shi, Kanagawa 252-0012 (JP); SHAO, Yongzheng, Zama-shi, Kanagawa 252-0012 (JP); MONNO, Dai, Zama-shi, Kanagawa 252-0012 (JP)
(74) Representative: Mathys & Squire
(86) International application number: PCT/JP2024/032653
(87) International publication number: WO 2025/074833

(57) **Abstract**

A battery module (100) includes a battery cell (110) and an accommodating body (200) that accommodates the battery cell (110). The accommodating body (200) includes a first metal portion (212) and a first fireproof portion (216) that is at least partially positioned between the first metal portion (212) and the battery cell (110).

## Description

### TECHNICAL FIELD

The present invention relates to a battery module.

### BACKGROUND ART

In recent years, various battery modules have been developed. The battery module includes a battery cell and an accommodating body that accommodates the battery cell.

Patent Document 1 discloses an example of a battery module. The battery module includes a plurality of battery cells, a module frame that accommodates the plurality of battery cells, and an end plate that is joined to the module frame. The end plate includes a body portion made of a metal material, and an insulating coating portion that covers an entire surface of the body portion.

Patent Document 2 discloses an example of a battery module. The battery module includes a plurality of battery cells, a module frame that accommodates the plurality of battery cells, a bus bar frame that is positioned between a side surface portion of the module frame and the plurality of battery cells, and an insulating plate that is positioned between the side surface portion of the module frame and the bus bar frame.

### RELATED DOCUMENT

### PATENT DOCUMENT

Patent Document 1: PCT Japanese Translation Patent Publication No. 2021-532543
Patent Document 2: PCT Japanese Translation Patent Publication No. 2022-519234

### SUMMARY OF THE INVENTION

### TECHNICAL PROBLEM

The accommodating body that accommodates the battery cell may include a metal portion such as a metal plate. To suppress short-circuiting of the battery cell and the metal portion, an electrically insulating resin portion may be provided between the battery cell and the metal portion. However, when abnormal heat generation occurs in the battery cell, the resin portion may be melted. When the resin portion is melted, it may be difficult to suppress short-circuiting of the battery cell and the metal portion.

An example of the object of the present invention is to suppress short-circuiting of the battery cell and the accommodating body when abnormal heat generation occurs in the battery cell. Other objects of the present invention will become apparent from the description of the present specification.

### SOLUTION TO PROBLEM

An aspect of the present invention is as follows.
1. A battery module including:
   a battery cell; and
   an accommodating body that accommodates the battery cell,
   in which the accommodating body includes a metal portion and a heat-resistant portion that is at least partially located between the metal portion and the battery cell.
2. The battery module according to 1., in which the accommodating body further includes a resin portion, and in which the heat-resistant portion is at least partially located between the metal portion and the resin portion.
3. The battery module according to 2., in which the metal portion and the resin portion are joined to each other with the resin portion extending at least partially through the heat-resistant portion.
4. The battery module according to any one of 1. to 3., in which the heat-resistant portion covers at least a part of an edge of the metal portion.
5. The battery module according to 4., in which the metal portion defines a notch including the at least a part of the edge of the metal portion, and in which a space defined by the notch and a conductor electrically connected to the battery cell at least partially overlap with each other.
6. The battery module according to any one of 1. to 5., in which the heat-resistant portion includes silicon fibers.
7. The battery module according to any one of 1. to 6., in which the battery cell includes a tab, and in which the heat-resistant portion is at least partially located between the metal portion and the tab.

### ADVANTAGEOUS EFFECTS OF INVENTION

According to the aspect of the present invention, short-circuiting of the battery cell and the accommodating body can be suppressed when abnormal heat generation occurs in the battery cell.

### BRIEF DESCRIPTION OF THE DRAWINGS

[FIG. 1] An exploded perspective view of a battery module according to an embodiment.
[FIG. 2] A front perspective view of a first plate and a second plate according to the embodiment.
[FIG. 3] A schematic cross-sectional view taken along line A-A of FIG. 2.

### DESCRIPTION OF EMBODIMENTS

Hereinafter, an embodiment of the present invention will be described with reference to the drawings. In all drawings, the same constituent elements are denoted by the same reference signs, and detailed description thereof will not be repeated.

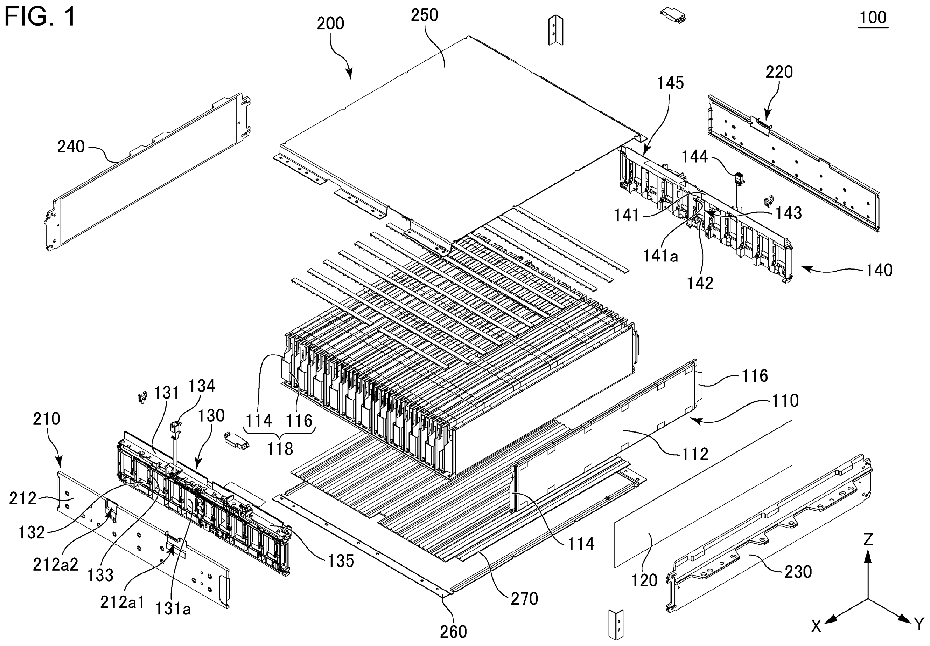

FIG. 1 is an exploded perspective view of battery module 100 according to the embodiment.

In each of the drawings, X direction, Y direction, and Z direction are illustrated for description. The X direction indicates a front-rear direction of battery module 100. The Y direction is orthogonal to the X direction. The Y direction indicates a left-right direction of battery module 100. The Z direction is orthogonal to both the X direction and the Y direction. The Z direction indicates an up-down direction of battery module 100. The arrow indicating the X direction, indicating the Y direction, and the arrow indicating the Z direction indicate a front direction, a left direction, and an upward direction of battery module 100, respectively. Hereinafter, a tip end side of the arrow indicating the X direction will be referred to as a +X side, and a side opposite to the tip end of the arrow indicating the X direction will be referred to as a - X side, a tip end side of the arrow indicating the Y direction will be referred to as a +Y side, and a side opposite to the tip end of the arrow indicating the Y direction will be referred to as a -Y side, a tip end side of the arrow indicating the Z direction will be referred to as a +Z side, and a side opposite to the tip end of the arrow indicating the Z direction will be referred to as a -Z side. The relationship between the X direction, the Y direction, and the Z direction and a front-rear direction, a left-right direction, and an up-down direction of battery module 100 is not limited to the above example.

The battery module 100 includes a plurality of battery cells 110, a plurality of compression pads 120, a first voltage detection device 130, a second voltage detection device 140, and the accommodating body 200.

The plurality of battery cells 110 and the plurality of compression pads 120 are alternately stacked in the Y direction. Each compression pad 120 is disposed between battery cells 110 adjacent to each other in the Y direction and on both sides of the plurality of battery cells 110 in the Y direction. Hereinafter, the plurality of battery cells 110 and the plurality of compression pads 120 alternately stacked in the Y direction will be referred to as a stack of the battery cells 110, as necessary. The dimension of each battery cell 110 in the X direction is a longitudinal direction dimension of each battery cell 110. The dimension of each battery cell 110 in the Z direction is a transverse direction dimension of each battery cell 110. The dimension of each battery cell 110 in the Y direction is a thickness direction dimension of each battery cell 110. The shape of each battery cell 110 is not limited to this example.

Each battery cell 110 includes a battery element (not shown), the exterior material 112, the positive electrode tab 114, and the negative electrode tab 116. In an example, the battery element includes a plurality of positive electrodes and a plurality of negative electrodes (not shown) that are alternately stacked in the Y direction, and a separator (not shown) that is positioned between the positive electrode and the negative electrode adjacent to each other in the Y direction. The exterior material 112 seals the battery element and an electrolytic solution (not shown). The positive electrode tab 114 is electrically connected to the positive electrode of the battery element. The positive electrode tab 114 is led out from one side of the exterior material 112 in the X direction. The negative electrode tab 116 is electrically connected to the negative electrode of the battery element. The negative electrode tab 116 is led out from the other side of the exterior material 112 in the X direction. However, the structure of each battery cell 110 is not limited to this example.

Each battery cell 110 may be a solid-state battery. In the solid-state battery, a solid electrolyte layer is provided at a portion corresponding to the separator. The solid-state battery does not include the electrolyte. Hereinafter, the battery cell 110 will be described as a battery cell including an electrolyte unless otherwise specified.

The plurality of battery cells 110 is electrically connected in a combination of series and parallel. Specifically, a cell group including at least two battery cells 110 that are adjacent to each other in the Y direction and are connected in parallel is stacked in the Y direction and is connected in series. On the +X side of the stack of the battery cells 110, the positive electrode tab 114 led out from the battery cell 110 of one cell group connected in parallel and the negative electrode tab 116 led out from the battery cell 110 of the other cell group connected in parallel are electrically connected to each other, and the tab group 118 including the positive electrode tab 114 and the negative electrode tab 116 is positioned. the positive electrode tab 114 and the negative electrode tab 116 in the tab group 118 are joined to each other, for example, by laser welding. The tab group 118 is also positioned on the -X side of the stack of the battery cells 110. Therefore, the plurality of cell groups is connected in series from the cell group positioned on one end side of the stack of the battery cells 110 in the Y direction to the cell group positioned on the other end side of the stack of the battery cells 110 in the Y direction. Hereinafter, the tab group 118 positioned on the +X side of the stack of the battery cells 110 will be referred to as a +X side tab group 118, and the tab group 118 positioned on the -X side of the stack of the battery cells 110 will be referred to as a -X side tab group 118, as necessary.

The electrical connection of the plurality of battery cells 110 is not limited to the above example. For example, a single battery cell 110 may be connected in series to constitute the stack of the battery cells 110.

The first voltage detection device 130 detects a voltage of the plurality of +X side tab groups 118. The first voltage detection device 130 includes the first protector 131, a plurality of first voltage detection terminals 132, a plurality of first voltage detection lines 133, the first connector 134, and a first bus bar 135.

The first protector 131 covers the +X side portion of the stack of the battery cells 110. The first protector 131 is, for example, an insulator such as a resin. The first protector 131 defines a plurality of first openings 131a. Each of the plurality of +X side tab groups 118 is exposed to the +X side through each of the plurality of first openings 131a.

Each of the plurality of first voltage detection terminals 132 is positioned on the +X side of each of the plurality of +X side tab groups 118. Each first voltage detection terminal 132 is, for example, a conductor such as a metal. The -X side surface of each first voltage detection terminal 132 and the +X side surface of each +X side tab group 118 are joined to each other by a joining method such as laser welding. Therefore, each first voltage detection terminal 132 and each +X side tab group 118 are electrically connected to each other. Therefore, the first voltage detection device 130 can detect the voltage of each +X side tab group 118 by each first voltage detection terminal 132. The plurality of first voltage detection terminals 132 is integrally held by the first protector 131. Therefore, by appropriately positioning the first protector 131 with respect to the stack of the battery cells 110, each of the plurality of first voltage detection terminals 132 can be appropriately positioned with respect to each of the plurality of +X side tab groups 118.

One end of each first voltage detection line 133 and each first voltage detection terminal 132 are electrically connected to each other. The other end of each first voltage detection line 133 and the first connector 134 are electrically connected to each other. Therefore, the plurality of first voltage detection terminals 132 and the first connector 134 are electrically connected to each other through the plurality of first voltage detection lines 133. Each first voltage detection line 133 is routed through the first protector 131 between one end of each first voltage detection line 133 and the other end of each first voltage detection line 133.

The first bus bar 135 is disposed at the +Y side end portion of the first protector 131. The first bus bar 135 is electrically connected to the positive electrode tab 114 led out to +X side from the battery cell 110 of the cell group positioned at the +Y side end portion of the stack of the battery cells 110. The first bus bar 135 functions as an external terminal for electrically connecting the battery module 100 to another battery module or an external device.

The second voltage detection device 140 detects a voltage of the plurality of -X side tab groups 118. The second voltage detection device 140 includes a second protector 141, a plurality of second voltage detection terminals 142, a plurality of second voltage detection lines 143, a second connector 144, and a second bus bar 145.

The second protector 141 covers the -X side portion of the stack of the battery cells 110. The second protector 141 is, for example, an insulator such as a resin. The second protector 141 defines a plurality of second openings 141a. Each of the plurality of -X side tab groups 118 is exposed to the -X side through each of the plurality of second openings 141a.

Each of the plurality of second voltage detection terminals 142 is positioned on the -X side of each of the plurality of -X side tab groups 118. Each second voltage detection terminal 142 is, for example, a conductor such as a metal. The +X side surface of each second voltage detection terminal 142 and the -X side surface of each -X side tab group 118 are joined to each other by a joining method such as laser welding. Therefore, each second voltage detection terminal 142 and each -X side tab group 118 are electrically connected to each other. Therefore, second voltage detection device 140 can detect the voltage of each -X side tab group 118 by each second voltage detection terminal 142. The plurality of second voltage detection terminals 142 are integrally held by the second protector 141. Therefore, by appropriately positioning second protector 141 with respect to the stack of the battery cells 110, each of the plurality of second voltage detection terminals 142 can be appropriately positioned with respect to each of the plurality of -X side tab groups 118.

One end of each second voltage detection line 143 and each second voltage detection terminal 142 are electrically connected to each other. The other end of each second voltage detection line 143 and the second connector 144 are electrically connected to each other. Therefore, the plurality of second voltage detection terminals 142 and the second connector 144 are electrically connected to each other through the plurality of second voltage detection lines 143. Each second voltage detection line 143 is routed through the second protector 141 between one end of each second voltage detection line 143 and the other end of each second voltage detection line 143.

The second bus bar 145 is disposed at the -Y side end portion of the second protector 141. The second bus bar 145 is electrically connected to the negative electrode tab 116 led out to the -X side from the battery cell 110 of the cell group positioned at the -Y side end portion of the stack of the battery cells 110. The second bus bar 145 functions as an external terminal for electrically connecting the battery module 100 to another battery module or an external device.

In the example shown in FIG. 1, the positive electrode tab 114 of the terminal of the plurality of cell groups connected in series is led out to the +X side from the battery cell 110 of the cell group positioned at the +Y side end portion of the stack of the battery cells 110, and the negative electrode tab 116 of the terminal of the plurality of cell groups connected in series is led out to the -X side from the battery cell 110 of the cell group positioned at the -Y side end portion of the stack of the battery cells 110. Therefore, the first bus bar 135 is disposed on the +X side and the +Y side with respect to the stack of the battery cells 110, and the second bus bar 145 is disposed on the -X side and the -Y side with respect to the stack of the battery cells 110. However, the disposition of the positive electrode tab 114 and the negative electrode tab 116 of the terminal of the plurality of cell groups connected in series may be different depending on the number of battery cells 110 included in the stack of the battery cells 110. For example, the positive electrode tab 114 of the terminal of the plurality of cell groups connected in series may be led out to the +X side from the battery cell 110 of the cell group positioned at the +Y side end portion of the stack of the battery cells 110, and the negative electrode tab 116 of the terminal of the plurality of cell groups connected in series may be led out to the +X side from the battery cell 110 of the cell group positioned at the -Y side end portion of the stack of the battery cells 110. In this case, the first bus bar 135 is disposed on the +X side and the +Y side with respect to the stack of the battery cells 110, and the second bus bar 145 is disposed on the +X side and the -Y side with respect to the stack of the battery cells 110.
the accommodating body 200 includes a first plate 210, a second plate 220, a third plate 230, a fourth plate 240, a fifth plate 250, and a sixth plate 260.

The first plate 210 covers the +X side portion of the stack of the battery cells 110 and the +X side portion of the first voltage detection device 130. The second plate 220 covers the -X side portion of the stack of the battery cells 110 and the -X side portion of the second voltage detection device 140. The third plate 230 covers the +Y side portion of the stack of the battery cells 110. The fourth plate 240 covers the -Y side portion of the stack of the battery cells 110. The fifth plate 250 covers the +Z side portion of the stack of the battery cells 110. The sixth plate 260 covers the -Z side portion of the stack of the battery cells 110. Thermally conductive adhesive 270 is disposed between the +Z side surface of the sixth plate 260 and the -Z side surface of the stack of the battery cells 110. Therefore, heat generated from the stack of the battery cells 110 can be dissipated downward from the battery module 100 through thermally conductive adhesive 270.

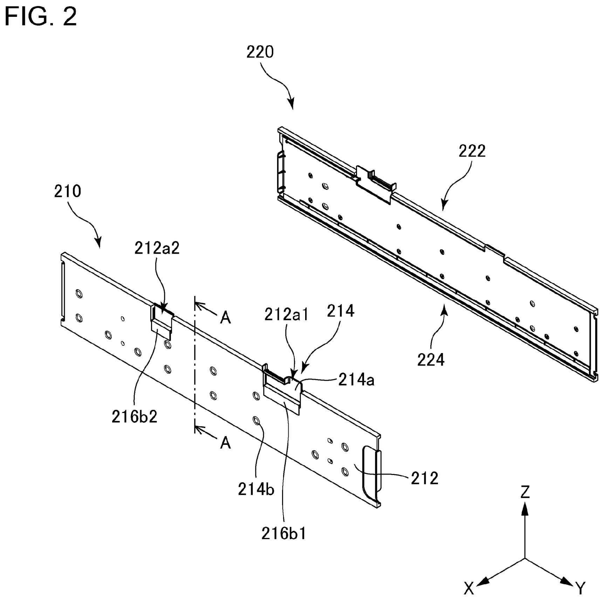

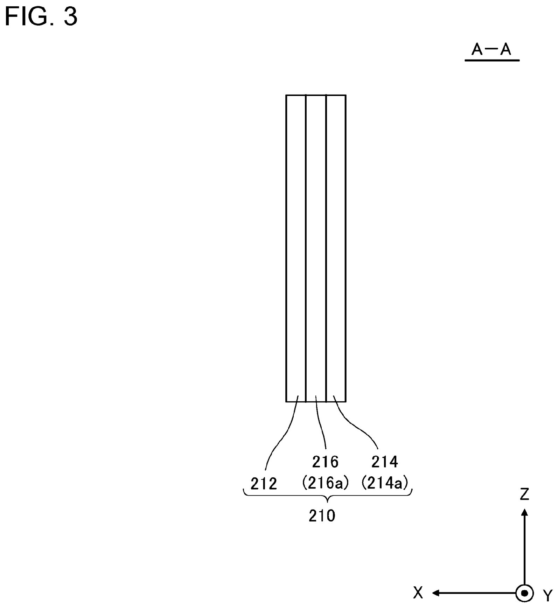

FIG. 2 is a front perspective view of the first plate 210 and the second plate 220 according to the embodiment. FIG. 3 is a schematic cross-sectional view taken along line A-A of FIG. 2.

The first plate 210 according to the embodiment will be described with reference to FIGS. 2 and 3, and, as necessary, with reference to FIG. 1.

The first plate 210 includes a first metal portion 212, a first resin portion 214, and a first fireproof portion 216. The first metal portion 212 defines a first notch 212a1 and a second notch 212a2. The first resin portion 214 includes a first resin plate 214a and a plurality of first resin protrusions 214b. The first fireproof portion 216 includes a first fireproof sheet 216a, a first fireproof extending sheet 216b1, and a second fireproof extending sheet 216b2.

The first metal portion 212 is made of, for example, a metal such as aluminum or stainless steel. The rigidity of the first metal portion 212 can be made higher than the rigidity of the resin. Therefore, when the first plate 210 includes the first metal portion 212, the strength of the first plate 210 can be improved as compared with a case where the first plate 210 consists of only the resin without including the first metal portion 212.

The first metal portion 212 is a metal plate having a thickness substantially parallel to the X direction. Specifically, the first metal portion 212 has a substantially rectangular shape having a pair of long sides substantially parallel to the Y direction and a pair of short sides substantially parallel to the Z direction, except for the first notch 212a1 and the second notch 212a2.

As shown in FIG. 2, the first notch 212a1 is positioned at the +Y side portion of the +Z side long side of the first metal portion 212. As shown in FIGS. 1 and 2, a space defined by the first notch 212a1 and the first bus bar 135 at least partially overlap with each other in the X direction. The first bus bar 135 is a conductor electrically connected to the battery cell 110. Therefore, electrical insulation between the first metal portion 212 and the first bus bar 135 can be ensured as compared with a case where the first metal portion 212 does not define the first notch 212a1.

As shown in FIG. 2, the second notch 212a2 is positioned at the -Y side portion of the +Z side long side of the first metal portion 212. As shown in FIGS. 1 and 2, a space defined by the second notch 212a2 and the first connector 134 at least partially overlap with each other in the X direction. The first connector 134 is a conductor electrically connected to the battery cell 110. Therefore, electrical insulation between the first metal portion 212 and the first connector 134 can be ensured as compared with a case where the first metal portion 212 does not define the second notch 212a2.

The first metal portion 212 may define a notch instead of or in addition to first notch 212a1 and second notch 212a2. A space defined by the notch and a conductor electrically connected to the battery cell 110 may at least partially overlap with each other in the X direction. When the space and the conductor at least partially overlap with each other in the X direction, electrical insulation between the first metal portion 212 and the conductor can be ensured as compared with a case where the first metal portion 212 does not define the notch.

The first resin portion 214 is made of, for example, a resin such as polypropylene (PP).

The first resin plate 214a has a thickness substantially parallel to the X direction. Specifically, the first resin plate 214a has a substantially rectangular shape having a pair of long sides substantially parallel to the Y direction and a pair of short sides substantially parallel to the Z direction.

The first resin plate 214a has electrically insulating properties. The first resin plate 214a covers substantially the entire -X side surface of the first metal portion 212. Therefore, the first resin plate 214a is at least partially positioned between the -X side surface of the first metal portion 212 and each surface of the +X side of the +X side tab group 118, the first voltage detection terminal 132, and the first bus bar 135 in the X direction. Therefore, the first resin plate 214a can suppress short-circuiting between the first metal portion 212 and each of the +X side tab group 118, the first voltage detection terminal 132, and the first bus bar 135.

The plurality of first resin protrusions 214b is provided on the +X side surface side of the first resin plate 214a. For example, the first resin plate 214a and the plurality of the first resin protrusions 214b are integrally formed by resin molding. The first metal portion 212 and the first resin plate 214a are joined to each other by heat staking of the plurality of first resin protrusions 214b while a first fireproof sheet 216a described below is at least partially disposed between the -X side surface of the first metal portion 212 and the +X side surface of the first resin plate 214a. Specifically, when the first metal portion 212 and the first resin plate 214a are joined to each other, each first resin protrusion 214b extends through a through-hole provided in the first fireproof sheet 216a and a through-hole provided in the first metal portion 212 in the X direction. A dimension of each first resin protrusion 214b in a direction perpendicular to the X direction at the +X side end part of each first resin protrusion 214b is larger than a dimension of the through-hole provided in first metal portion 212 in the direction perpendicular to the X direction by heat staking of the +X side end part of each first resin protrusion 214b. Therefore, the first metal portion 212 and the first resin plate 214a are joined to each other to prevent the first metal portion 212 from coming off toward the +X side with respect to the first resin plate 214a. However, the joining method of the first metal portion 212 and the first resin plate 214a is not limited to heat staking of the +X side end part of each first resin portion 214.

The formability of the first resin portion 214 is higher than the formability of the first fireproof portion 216. Therefore, in the embodiment, the degree of freedom of the shape of the first plate 210 on the -X side can be improved as compared with a case where the first plate 210 does not include the first resin portion 214. However, the first plate 210 may include the first metal portion 212 and the first fireproof portion 216 without including the first resin portion 214.

The first fireproof portion 216 includes, for example, a fireproof material such as a silicon fiber.

The first fireproof sheet 216a has a thickness substantially parallel to the X direction. Specifically, the first resin plate 214a has a substantially rectangular shape having a pair of long sides substantially parallel to the Y direction and a pair of short sides substantially parallel to the Z direction, except for the first fireproof extending sheet 216b1 and the second fireproof extending sheet 216b2.

The first fireproof sheet 216a has electrically insulating properties. The first fireproof sheet 216a covers substantially the entire -X side surface of the first metal portion 212. Therefore, the first fireproof sheet 216a is at least partially positioned between the -X side surface of the first metal portion 212 and each surface of the +X side of +X side tab group 118, the first voltage detection terminal 132, and the first bus bar 135 in the X direction. Therefore, the first fireproof sheet 216a can suppress short-circuiting between first metal portion 212 and each of the +X side tab group 118, the first voltage detection terminal 132, and the first bus bar 135.

The first fireproof sheet 216a may not cover substantially the entire -X side surface of the first metal portion 212. For example, the first fireproof sheet 216a may partially cover a portion overlapping with each of the +X side tab group 118, the first voltage detection terminal 132, and the first bus bar 135 of the first metal portion 212 on the -X side in the X direction. When the first fireproof sheet 216a partially covers the portion of the -X side surface of the first metal portion 212, the first fireproof sheet 216a can suppress short-circuiting between the first metal portion 212 and each of the +X side tab group 118, the first voltage detection terminal 132, and the first bus bar 135. When the first fireproof sheet 216a partially covers the -X side surface of the first metal portion 212, the material cost of the first fireproof sheet 216a can be reduced as compared with a case where the first fireproof sheet 216a covers substantially the entire -X side surface of the first metal portion 212.

As shown in FIG. 2, the first fireproof extending sheet 216b1 is folded toward the -Z side when at least a part of the first fireproof extending sheet 216b1 covers at least a part of an edge of the first notch 212a1 of the first metal portion 212. In the example shown in FIG. 2, the first fireproof extending sheet 216b1 covers an edge of the first metal portion 212 directed to the +Z side of the first notch 212a1. Therefore, electrical insulation between the first metal portion 212 and a conductor disposed around first notch 212a1 can be ensured as compared with a case where the first fireproof extending sheet 216b1 does not cover the edge of the first metal portion 212. For example, a connection bus bar (not shown) that electrically connects the first bus bar 135 and a bus bar of an external device such as another battery module to each other may be disposed around the first notch 212a1. In the embodiment, even if the connection bus bar falls toward the edge of the first metal portion 212, the first fireproof extending sheet 216b1 can suppress short-circuiting of the connection bus bar and the first metal portion 212.

As shown in FIG. 2, the second fireproof extending sheet 216b2 is folded toward the -Z side when at least a part of the second fireproof extending sheet 216b2 covers at least a part of an edge of the second notch 212a2 of the first metal portion 212. In the example shown in FIG. 2, the second fireproof extending sheet 216b2 covers an edge of the first metal portion 212 directed to the +Z side of the second notch 212a2. Therefore, electrical insulation between the first metal portion 212 and a conductor disposed around the second notch 212a2 can be ensured as compared with a case where the second fireproof extending sheet 216b2 does not cover the edge of the first metal portion 212. For example, a harness (not shown) that is electrically connected to the first connector 134 may be disposed around the second notch 212a2. In the embodiment, even if the harness falls toward the edge of the first metal portion 212, the second fireproof extending sheet 216b2 can suppress short-circuiting of the harness and the first metal portion 212.

In the embodiment, the first fireproof portion 216 covers at least a part of an edge of the notch of the first metal portion 212, such as the first notch 212a1 and the second notch 212a2. However, the first fireproof portion 216 may cover at least a part of an edge of the first metal portion 212 different from the edge of the notch. For example, the first fireproof portion 216 may cover at least a part of the edge of the first metal portion 212 when the first metal portion 212 does not define the notch. When the first fireproof portion 216 covers at least a part of the edge of the first metal portion 212, electrical insulation between the first metal portion 212 and a conductor disposed around a portion of the edge of the first metal portion 212 covered by the first fireproof portion 216 can be ensured as compared with a case where the first fireproof portion 216 does not cover any part of the edge of the first metal portion 212.

The first fireproof portion 216 is a heat-resistant portion having relatively high heat resistance. The heat resistance of the first fireproof portion 216 is such that the electrical insulation of the first fireproof portion 216 is maintained, for example, after the first fireproof portion 216 is exposed to 800 °C for 10 minutes and preferably exposed to 1000 °C for 10 minutes. In the embodiment, even if abnormal heat generation occurs in the battery cell 110, the heat resistance of the first fireproof portion 216 can prevent the first fireproof portion 216 from melting easily. Therefore, even if the first resin portion 214 is melted by abnormal heat generation of the battery cell 110, the first fireproof portion 216 can be prevented from melting easily. Therefore, even if the first resin portion 214 is melted by abnormal heat generation of the battery cell 110, the first fireproof portion 216 can suppress short-circuiting between first metal portion 212 and each of the +X side tab group 118, the first voltage detection terminal 132, and the first bus bar 135.

In an example, the heat resistance of the first fireproof portion 216 is higher than the heat resistance of the first resin portion 214. When the heat resistance of the first fireproof portion 216 is higher than the heat resistance of the first resin portion 214, the first fireproof portion 216 can be made more difficult to melt than the first resin portion 214 even if abnormal heat generation occurs in the battery cell 110.

The first fireproof portion 216 further has relatively high fire resistance. The fire resistance is determined by a time required for a flame to burn a member. The longer the time required for the flame to burn the member, the higher the fire resistance, and the shorter the time required for the flame to burn the member, the lower the fire resistance. In the embodiment, even if abnormal heat generation occurs in the battery cell 110, the fire resistance of the first fireproof portion 216 can prevent the first fireproof portion 216 from melting easily. Therefore, even if the first resin portion 214 is melted by abnormal heat generation of the battery cell 110, the first fireproof portion 216 can be prevent from melting easily. Therefore, even if the first resin portion 214 is melted by abnormal heat generation of the battery cell 110, the first fireproof portion 216 can suppress short-circuiting between first metal portion 212 and each of the +X side tab group 118, the first voltage detection terminal 132, and the first bus bar 135.

In an example, the fire resistance of the first fireproof portion 216 is higher than the fire resistance of the first resin portion 214. When the fire resistance of the first fireproof portion 216 is higher than the fire resistance of the first resin portion 214, the first fireproof portion 216 can be made more difficult to melt than the first resin portion 214 even if abnormal heat generation occurs in the battery cell 110.

The first fireproof portion 216 may or may not have flame retardancy. When the first fireproof portion 216 has flame retardancy, the first fireproof portion 216 may melt without burning at a temperature higher than a heat resistance temperature of the first fireproof portion 216. When the first fireproof portion 216 does not have flame retardancy, the first fireproof portion 216 may burn and melt at a temperature higher than a heat resistance temperature of the first fireproof portion 216.

As shown in FIG. 2, the second plate 220 includes a second metal portion 222 and a second resin portion 224 corresponding to the first metal portion 212 and the first resin portion 214, respectively, in the same manner as the first plate 210. The second plate 220 includes a second fireproof portion (not shown) corresponding to the first fireproof portion 216 in the same manner as the first plate 210. Therefore, even if abnormal heat generation occurs in the battery cell 110, the second fireproof portion can suppress short-circuiting between the second metal portion 222 and each of the -X side tab group 118, the second voltage detection terminal 142, and the second bus bar 145.

In the embodiment, the first plate 210 and the second plate 220 have a three-layer structure of a resin portion, a fireproof portion, and a metal portion. However, the third plate 230, the fourth plate 240, the fifth plate 250, and the sixth plate 260 may also have a three-layer structure of a resin portion, a fireproof portion, and a metal portion in the same manner as the first plate 210 and the second plate 220. When the fireproof portion of each plate is at least partially positioned between the metal portion of each plate and the battery cell 110, short-circuiting of the battery cell 110 and the accommodating body 200 when abnormal heat generation occurs in the battery cell 110 can be suppressed as compared with a case where the fireproof portion is not provided in each plate. In addition, each plate may have a three-layer structure of a resin portion, a heat-resistant portion, and a metal portion. The heat-resistant portion may or may not have flame retardancy.

Hereinabove, the embodiments of the present invention have been described with reference to the drawings. However, the embodiment is merely an example of the present invention, and various configurations other than the above-described configurations can also be adopted.

This application claims priority based on Japanese Patent Application No. 2023-172622 filed on October 04, 2023, and the disclosure of which is incorporated herein in its entirety by reference.

### REFERENCE SIGNS LIST

100 battery modules, 110 battery cell, 112 exterior material, 114 positive electrode tab, 116 negative electrode tab, 118 tab group, 120 compression pad, 130 first voltage detection device, 131 first protector, 131a first opening, 132 first voltage detection terminal, 133 first voltage detection line, 134 first connector, 135 first bus bar, 140 second voltage detection device, 141 second protector, 141a second opening, 142 second voltage detection terminal, 143 second voltage detection line, 144 second connector, 145 second bus bar, 200 accommodating body, 210 first plate, 212 first metal portion, 212a1 first notch, 212a2 second notch, 214 first resin portion, 214a first resin plate, 214b first resin protrusion, 216 first fireproof portion, 216a first fireproof sheet, 216b1 first fireproof extending sheet, 216b2 second fireproof extending sheet, 220 second plate, 222 second metal portion, 224 second resin portion, 230 third plate, 240 fourth plate, 250 fifth plate, 260 sixth plate, 270 thermally conductive adhesive

## Claims

1. A battery module comprising:
a battery cell; and
an accommodating body that accommodates the battery cell,
wherein the accommodating body includes a metal portion and a heat-resistant portion that is at least partially located between the metal portion and the battery cell.

2. The battery module according to claim 1, wherein the accommodating body further includes a resin portion, and wherein the heat-resistant portion is at least partially located between the metal portion and the resin portion.

3. The battery module according to claim 2, wherein the metal portion and the resin portion are joined to each other with the resin portion extending at least partially through the heat-resistant portion.

4. The battery module according to any one of claims 1 to 3, wherein the heat-resistant portion covers at least a part of an edge of the metal portion.

5. The battery module according to claim 4, wherein the metal portion defines a notch including the at least a part of the edge of the metal portion, and wherein a space defined by the notch and a conductor electrically connected to the battery cell at least partially overlap with each other.

6. The battery module according to any one of claims 1 to 5, wherein the heat-resistant portion includes silicon fibers.

7. The battery module according to any one of claims 1 to 6, wherein the battery cell includes a tab, and wherein the heat-resistant portion is at least partially located between the metal portion and the tab.
